# FASCICULE DE BREVET EUROPEEN

(11) **EP 1 537 788 B1**
(45) Date de publication et mention de la délivrance du brevet: **10.10.2007**
(21) Numéro de dépôt: 04292711.1
(22) Date de dépôt: 16.11.2004
(51) Int. Cl.: A23K 1/175, A23K 1/16

(54) **Composition comprenant de l'argile et de polysaccharides comme additifs de stabilisation d'aliments complets sous forme liquide pour porcs, son utilisation et sa préparation**
Zusammensetzung enthaltend Ton und Polysaccharide als Zusatzstoff zur Stabilisation von Komplett-Schweinefutter in flussiger Form, ihre Verwendung und Herstellungsverfahren
Composition comprising clay and polysacchairdes as an additive for stabilisation of complete pig feeds in liquid form, its use and process of manufacture

(30) Priorité: 27.11.2003 FR 0313954
(43) Date de publication de la demande: 08.06.2005
(73) Titulaire: Olmix, 56580 Rohan (FR); Degussa Texturant Systems France SAS, 92035 Paris La Défense (FR)
(72) Inventeur: Demais, Herve, 56390 Brandivy (FR)
(74) Mandataire: Kling, Simone

(56) Documents cités:
- WO-A-96/25055
- US-A- 3 901 976
- US-A- 4 219 572
- US-A- 4 888 185
- "LA SOUPE EN ENGRAISSEMENT: DES AUGES PROPRES ET DES PORCS QUI POUSSENT" PORC MAGAZINE, PORC MAGAZINE, RENNES, FR, no. 363, février 2003 (2003-02), pages 134-137, XP001180333 ISSN: 0296-9076

## Description

La présente invention concerne l'utilisation d'additifs pour stabiliser des préparations alimentaires, notamment d'un aliment complet, sous forme liquide, destinées aux porcs.

Dans des élevages industriels de porcs, il est plus pratique et plus économique de distribuer les aliments sous forme liquide, communément appelés des soupes, que sous forme sèche. Cette pratique n'est pas exempte de difficultés, en particulier pour ajuster la dilution. Pas assez diluée, la soupe est difficile à brasser et à pousser, à la fois trop épaisse dans les premières auges et trop claire en bout de chaîne de distribution. Trop diluée, elle dépasse souvent les capacités d'ingestion des porcs, elle est hétérogène, à la fois trop épaisse dans les premières auges et trop claire en bout de chaîne de distribution.

Pour réduire le taux de dilution nécessaire, il a été proposé d'améliorer la fluidité de la soupe par ajout d'une argile de sépiolite micronisée, commercialisée sous le nom SPLF® (Société Tolsa), cf Porc Magazine, Février 2003, n°363, pages 134-137.

Mais se pose toujours un problème de décantation de l'aliment lorsqu'il est mis dans l'eau, ce qui rend difficile sa distribution sous une forme homogène.

L'invention résout ce problème en fluidisant, homogénéisant et stabilisant la soupe par ajout d'un mélange d'argile et de polysaccharides.

Des mélanges d'argile et de polysaccharides ont déjà été décrits, notamment dans les brevets américains US 4, 888, 185 et US 3, 901, 976, mais jamais dans l'application proposée par l'invention. Ainsi le brevet US 4,888,185 décrit que des gommes de polysaccharides, et des argiles dispersées, comme l'attapulgite, la sépiolite, la bentonite, peuvent être ajoutées en tant qu'agents de suspension pour des compléments alimentaires pour ruminants. Le brevet US 3,901,976 décrit de son côté des produits thixotropes pour l'alimentation de ruminants, ces produits comprenant notamment des sources de sucres, des sources d'azote non protéiques, et des argiles, telles que bentonite, attapulgite ou sépiolite.

WO-A-96 25055 enseigne l'utilisation d'argiles et de polysaccharides (p.ex. des molasses, des dextranes, de l'amidon de maïs, CMC, gomme ghatti, gomme xanthane, gomme arabic, gélatine, alginate, β cyclodextrine, pectine, carraghénane ou leurs mélanges) pour la stabilisation d'aliments de bétail liquides.

La présente invention a donc pour objet l'utilisation d'une association d'argile et de polysaccharide dans un rapport de poids argile/polysaccharide de 10 à 25 pour la stabilisation de préparations alimentaires sous forme liquide destinées aux porcs.

Les termes « préparations alimentaires sous forme liquide » et « soupes » sont utilisés de manière synonyme dans le cadre de l'invention.

Le terme « aliment complet » désigne un mélange d'aliments des animaux qui, grâce à leur composition, suffisent à assurer une ration journalière, à savoir la quantité rapportée à une teneur d'humidité de 12 %, nécessaire à un animal d'une espèce, d'une catégorie d'âge et d'un rendement déterminé, pour satisfaire l'ensemble de ses besoins.

On peut utiliser un ou plusieurs types de polysaccharides différents. Les polysaccharides utilisés sont de préférence solubles à froid. Les polysaccharides préférés dans le cadre de l'invention sont l'alginate, la gomme de guar (également connue comme de la farine de graine de guar), la farine de konjac, le xanthane, le scléroglucane, le carraghénane, utilisés seuls ou en mélange.

Le mélange de polysaccharides comportant au moins 60 % en poids de xanthane est particulièrement préféré. Le reste comprend, de préférence uniquement, de la gomme de guar.

De manière préférée, le polysaccharide peut être utilisé dans un pourcentage de 0,01 à 1% en poids, de préférence entre 0,05 et 0,5% en poids, par rapport au poids d'un aliment sous forme de poudre destiné aux porcs, l'aliment étant dilué entre 2 et 4 fois son poids d'eau (soit 2 à 4 litres d'eau par kg d'aliment ramené à 86% de matières sèches) pour obtenir la préparation alimentaire sous forme liquide.

Les argiles utilisées sont de préférence des bentonites, de préférence encore des montmorillonites. Les montmorillonites sont des argiles de la famille des phyllosillicates de type 2/1. Ces types d'argiles encore appelés « argiles gonflantes » ont la particularité de pouvoir absorber l'eau des milieux « environnants » permettant leur mise en suspension dans les phases liquides. Par ailleurs, ces argiles sont également pourvues de propriétés adsorbantes liées à la réactivité ionique de certains cations de substitution présents dans les espaces interfoliaires. Ceci leur permet en particulier de fixer certaines structures organiques présentes dans le milieu et de développer ainsi un réseau proche d'une structure polymérique.

On peut bien entendu utiliser un ou plusieurs types d'argiles différents.

De manière préférée, l'argile peut être utilisé dans un pourcentage de 0,1 à 3% en poids, de préférence entre 0,5 et 2% en poids, par rapport au poids d'un aliment sous forme de poudre destiné aux porcs, l'aliment étant dilué dans 2 à 4 fois son poids d'eau (soit 2 à 4 litres d'eau par kg d'aliment ramené à 86% de matières sèches) pour obtenir la préparation alimentaire sous forme liquide.

On préfère donc utiliser, pour 100 g d'aliment sous forme de poudre, une quantité d'argile comprise entre 0,1g et 3g, de préférence entre 0,5 et 2g, et une quantité de polysaccharides comprise entre 0,01 et 1g, de préférence entre 0,05 et 0,5g.

De préférence, l'association d'argile et de polysaccharides est dans un rapport en poids argile/polysaccharides de 1 à 300, de préférence de 10 à 25, et encore préféré de 15 à 22.

Dans le cadre de l'invention, il apparaît que l'argile utilisée potentialise les effets de viscosité et de gélification des polysaccharides associés. La potentialisation des effets est d'autant plus marquée que la granulométrie de l'argile est plus fine, de préférence inférieure à 100 µm, de préférence inférieure à 60 µm, de préférence encore inférieure à 40 µm.

Un autre objet de l'invention est une composition, de préférence sous forme de poudre, pour la stabilisation de préparations alimentaires sous forme liquide destinées aux porcs, ladite composition comprenant un mélange de montmorillonite et de gommes xanthane et guar, dans un rapport en poids montmorillonite/gommes de 1 à 300, de préférence de 10 à 25, de préférence encore de 15 à 22.

Une composition de stabilisation préférée comprend 50 à 70 %, de préférence 60 % en poids d'argile, 3 à 5 % en poids de polysaccharide, et 25 à 47 %, de préférence 30 à 40 % en poids de charge minérale.

La charge minérale est optionnelle, et est de préférence choisie parmi les matériaux finement divisés inertes tels que la diatomée.

De préférence, la montmorillonite utilisée présente une granulométrie inférieure à 40 µm.

L'association d'argile et de polysaccharides mise en oeuvre dans l'invention permet de stabiliser et d'homogénéiser de manière efficace toute soupe pour porcs, tout en permettant de limiter l'apport d'eau nécessaire à la mécanisation de sa distribution. Ainsi, on utilise de manière avantageuse une dilution de 1,8 à 5 litres d'eau/kg d'aliment, de préférence de 2 à 4 l/kg, de préférence 2,4 l/kg. Ceci réduit les besoins en eau, ainsi que la production des effluents liquides (lisiers).

L'association d'argile et de polysaccharides mise en oeuvre dans l'invention facilite ainsi la distribution de l'alimentation aux porcs, permet de répartir équitablement la ration entre les animaux et également d'augmenter les plans de rationnement.

Surtout, la décantation de l'aliment est retardée, la stabilisation de la préparation alimentaire étant grandement améliorée.

Le mélange d'argile et de polysaccharides peut être mis en oeuvre de différentes manières. De manière pratique, on peut mélanger d'abord l'argile et le polysaccharide, de préférence sous forme de composition(s) en poudre, à l'aliment également sous forme de poudre, puis on dilue le mélange dans de l'eau, sous agitation.

Les procédés d'obtention d'une préparation alimentaire sous forme liquide, destinée aux porcs, mettant en oeuvre ce mélange, font également partie de l'invention.

En particulier, un objet de l'invention est un procédé de préparation d'une préparation d'aliment complet sous forme liquide, destinée aux porcs, comprenant les étapes consistant à :
a) mélanger une composition associant une argile et un polysaccharide avec un aliment sous forme de poudre destiné aux porcs, dans une proportion de 0,5 à 3% en poids de l'aliment ;
b) diluer le mélange dans 2 à 4 fois son poids d'eau, et mélanger, ce qui permet d'obtenir une préparation alimentaire sous forme liquide stabilisée.

Les figures et exemple ci-après illustrent l'invention sans en limiter la portée :

### LEGENDE DES FIGURES :

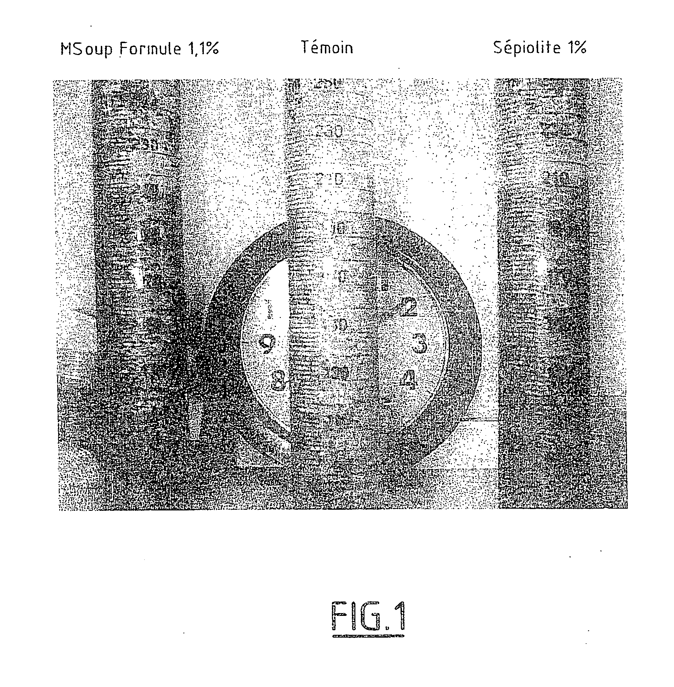

La figure 1 est une photographie présentant les éprouvettes de soupes témoin, sépiolite seule 1 %, et additif de l'invention (Msoup, Formule 1), 1 minute après agitation du mélange, puis mise à décanter.

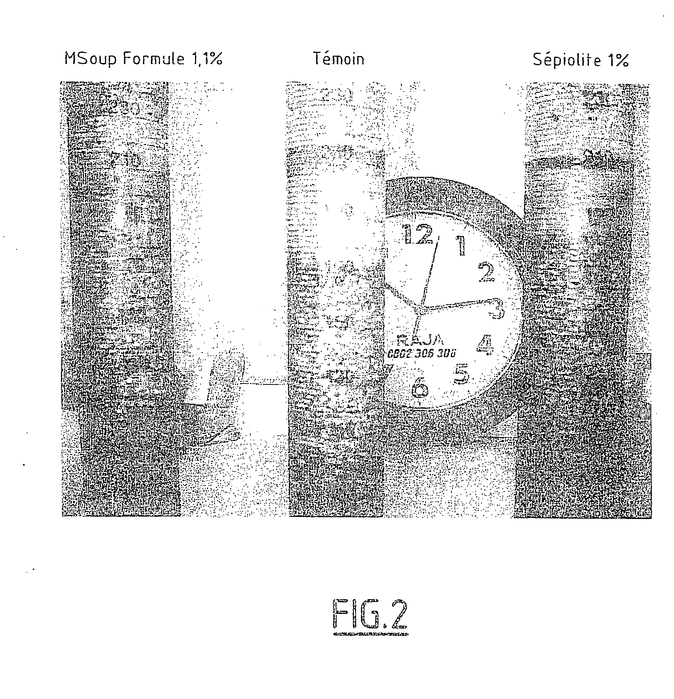

La figure 2 est une photographie présentant les éprouvettes de soupes témoin, sépiolite seule 1 %, et additif de l'invention (Msoup Formule 1), 5 minutes après agitation du mélange, puis mise à décanter.

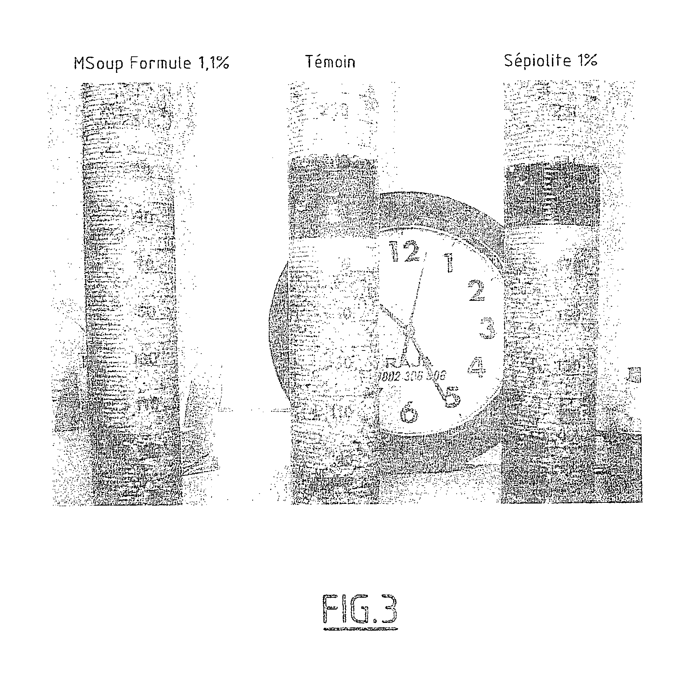

La figure 3 est une photographie présentant les éprouvettes de soupes témoin, sépiolite seule 1 %, et additif de l'invention (Msoup Formule 1), 15 minutes après agitation du mélange, puis mise à décanter.

### EXEMPLE :

La stabilité est évaluée selon le mode opératoire suivant :

| | |
|---|---|
| Eau | : 170 ml |
| Aliment porc en farine | : 70 g |
| Mélange argile/polysaccharides | : 1% de la masse d'aliment |
| Eprouvette Duran | : 250 ml |

- pré-mélange des poudres (argile + polysaccharide + aliment)
- verser l'eau dans l'éprouvette
- verser l'aliment prémélangé avec l'argile et le polysaccharide dans l'eau
- aussitôt boucher l'éprouvette avec la paume de la main et
- agiter fortement pour hydrater l'ensemble de l'aliment pendant 30 secondes à 60 secondes, puis
- retourner l'éprouvette complètement toutes les secondes environ pendant 5 minutes
- reposer l'éprouvette
- mesurer le déphasage toutes les minutes, puis des mesures plus espacées pendant 10 à 20 minutes

### 1. Eprouvette témoin :

### Absence d'argile et de polysaccharides

| | |
|---|---|
| Aliment | :70 g |
| Eau : | :170 ml |

Hauteur de décantation à 5 minutes : 5,5 cm
Hauteur de décantation à 10 minutes : 6 cm

### 2. Eprouvette de comparaison :

### Absence de polysaccharides

Présence d'une argile sépiolite qui n'est pas une bentonite (ce qui correspond au SPLF®)

| | |
|---|---|
| Sépiolite | : 0,7 g |
| Aliment | : 70 g |
| Eau | :170 ml |

Hauteur de décantation à 5 minutes : 3,5 cm
Hauteur de décantation à 10 minutes : 4,5 cm

### 3. Association selon l'invention :

### • Formule 1 :

| | |
|---|---|
| Montmorillonite (granulométrie 80µ) | : 0,658 g |
| Xanthane | : 0,028 g |
| Guar | : 0,014 g |
| Aliment | :70 g |
| Eau | :170 ml |

Hauteur de décantation à 5 minutes : 0,5 cm
Hauteur de décantation à 10 minutes : 1 cm

### • Formule 2 :

| | |
|---|---|
| Montmorillonite (granulométrie 80 µ) | : 0,651 g |
| Xanthane | : 0,021 g |
| Guar | : 0,0105 g |
| Aliment | :70 g |
| Eau | :170 ml |

Hauteur de décantation à 5 minutes : 1,5 cm
Hauteur de décantation à 10 minutes : 3 cm

### • Formule 3 :

| | |
|---|---|
| Montmorillonite (granulométrie < 40 µ) | : 0,651 g |
| Xanthane | : 0,021 g |
| Guar | 0,0105 g |
| Aliment | : 70 g |
| Eau | :170 ml |

Hauteur de décantation à 5 minutes : 1 cm
Hauteur de décantation à 10 minutes : 1,5 cm

Les résultats mesurés dans ces conditions démontrent de façon très claire la différence de performances obtenues grâce à l'association des polysaccharides et de la montmorillonite par rapport à l'utilisation de la sépiolite du SPLF®.

Par ailleurs, l'aptitude à l'écoulement de l'aliment est visualisée lors de la vidange du récipient. Quand on cherche à vider l'éprouvette, sans ajout du mélange argile/polysaccharide, on vide l'eau, l'aliment reste au fond, alors qu'avec un ajout du mélange argile/polysaccharide, l'ensemble se vide d'une façon homogène.

## Revendications

1. Utilisation d'une association d'argile et de polysaccharide dans un rapport en poids argile/polysaccharide de 10 à 25 pour la stabilisation de préparations alimentaires sous forme liquide destinées aux porcs.

2. Utilisation selon la revendication 1, dans laquelle l'argile est une bentonite.

3. Utilisation selon la revendication 2, dans laquelle l'argile est une montmorillonite.

4. Utilisation selon l'une des revendications 1 à 3, dans laquelle le polysaccharide est choisi parmi un alginate, la gomme guar, la farine de konjac, la gomme xanthane, le scléroglucane, et le carraghénane, seuls ou en mélange.

5. Utilisation selon la revendication 4, dans laquelle le polysaccharide est un mélange de gomme guar et de gomme xanthane.

6. Utilisation selon l'une des revendications 1 à 5, l'argile étant utilisé dans un pourcentage de 0,1 à 10% en poids, de préférence entre 0,5 et 5% en poids, par rapport au poids d'un aliment sous forme de poudre destiné aux porcs, l'aliment étant dilué dans 2 à 4 fois son poids d'eau pour obtenir la préparation alimentaire sous forme liquide.

7. Utilisation selon l'une des revendications 1 à 6, le polysaccharide étant utilisé dans un pourcentage de 0,01 à 1% en poids, de préférence entre 0,05 et 0,5% en poids, par rapport au poids d'un aliment sous forme de poudre destiné aux porcs, l'aliment étant dilué dans 2 à 4 fois son poids d'eau pour obtenir la préparation alimentaire sous forme liquide.

8. Utilisation selon l'une des revendications 1 à 6, dans laquelle l'association d'argile et de polysaccharides est dans un rapport en poids argile/polysaccharides de 15 à 22.

9. Composition pour la stabilisation de préparations alimentaires sous forme liquide destinées aux porcs, ladite composition comprenant un mélange de montmorillonite et de gommes xanthane et guar, dans un rapport en poids montmorillonite/gommes de 10 à 25, de préférence de 15 à 22.

10. Composition selon la revendication 9, sous forme de poudre.

11. Composition selon l'une des revendications 1 à 10, **caractérisée en ce qu'**il s'agit d'un aliment complet.

12. Procédé de préparation d'une préparation alimentaire sous forme liquide, destinée aux porcs, comprenant les étapes consistant à :
a) mélanger une composition telle que définie à l'une des revendications 9 à 11 avec un aliment sous forme de poudre destiné aux porcs, dans une proportion de 0,5 à 3% en poids de l'aliment ;
b) diluer le mélange dans 2 à 4 fois son poids d'eau, et mélanger, ce qui permet d'obtenir une préparation alimentaire sous forme liquide stabilisée.

## Claims

1. Use of an association of clay and polysaccharide in a ratio by weight of clay/polysaccharide of 10 to 25 for the stabilisation of pig feed preparations in liquid form.

2. Use according to Claim 1, wherein the clay is a bentonite.

3. Use according to Claim 2, wherein the clay is a montmorillonite.

4. Use according to one of Claims 1 to 3, wherein the polysaccharide is selected from among an alginate, guar gum, konjac flour, xanthan gum, scleroglucan and carragheenin, singly or in mixture.

5. Use according to Claim 4, wherein the polysaccharide is a mixture of guar gum and xanthan gum.

6. Use according to one of Claims 1 to 5, wherein the clay is used in a percentage by weight of 0.1 to 10%, preferably between 0.5 and 5%, in relation to the weight of a pig feed in powder form, said feed being diluted in 2- to 4-times its weight of water to obtain the feed preparation in liquid form.

7. Use according to one of Claims 1 to 6, wherein the polysaccharide is used in a percentage by weight of 0.01 to 1%, preferably between 0.05 and 0.5%, in relation to the weight of a pig feed in powder form, said feed being diluted in 2- to 4-times its weight of water to obtain the feed preparation in liquid form.

8. Use according to one of Claims 1 to 6, wherein the association of clay and polysaccharides is in a ratio by weight of clay/polysaccharides of 15 to 22.

9. Composition for the stabilisation of pig feed preparations in liquid form, said composition containing a mixture of montmorillonite and xanthan and guar gums in a ratio by weight of montmorillonite/gums of 10 to 25, preferably 15 to 22.

10. Composition according to Claim 9 in powder form.

11. Composition according to one of Claims 1 to 10, **characterised in that** it is a complete feed.

12. Method for the preparation of a pig feed preparation in liquid form comprising steps consisting of:
a) mixing a composition such as that defined in one of Claims 9 to 11 with a pig feed in powder form in a proportion by weight of 0.5 to 3% of the feed;
b) diluting the mixture in 2- to 4-times its weight of water and mixing to enable a stabilised feed preparation in liquid form to be obtained.

## Patentansprüche

1. Verwendung einer Association von Ton und Polysaccharid im Gewichtsverhältnis Ton/Polysaccharid von 10 bis 25 zur Stabilisierung von Futterpräparaten in flüssiger Form, die für Schweine bestimmt sind.

2. Verwendung nach Anspruch 1, wobei der Ton ein Bentonit ist.

3. Verwendung nach Anspruch 2, wobei der Ton ein Montmorillonit ist.

4. Verwendung nach einem der Ansprüche 1 bis 3, wobei das Polysaccharid ausgewählt wird aus einem Alginat, Guargummi, Konjacmehl, Xanthangummi, Scleroglucan und Carragheenan, einzeln oder als Gemisch.

5. Verwendung nach Anspruch 4, wobei das Polysaccharid eine Mischung von Guargummi und Xanthangummi ist.

6. Verwendung nach einem der Ansprüche 1 bis 5, wobei der Ton in einem Prozentanteil von 0,1 bis 10 Gew.-%, bevorzugt 0,5 und 5 Gew.-% bezogen auf das Gewicht eines Futters in Pulverform verwendet wird, das für Schweine bestimmt ist, wobei das Futter mit dem 2- bis 4-fachen seines Gewichts an Wasser verdünnt wird, um ein Futterpräparat in flüssiger Form zu erhalten.

7. Verwendung nach einem der Ansprüche 1 bis 6, wobei das Polysaccharid in einem Prozentanteil von 0,01 bis 1 Gew.-%, bevorzugt zwischen 0,05 und 0,5 Gew.-% bezogen auf das Gewicht eines Futtermittels in Form von Pulver, das für Schweine bestimmt ist verwendet wird, wobei das Futter mit dem 2- bis 4-facher seines Gewichts an Wasser verdünnt wird, um ein Futterpräparat in flüssiger Form zu erhalten.

8. Verwendung nach einem der Ansprüche 1 bis 6, wobei die Assoziation Ton und Polysacchariden in einem Gewichtsverhältnis Ton/Polysaccharide von 15 bis 22 vorliegt.

9. Zusammensetzung zur Stabilisierung von Futterpräparaten in flüssiger Form, die für Schweine bestimmt sind, wobei die Zusammensetzung eine Mischung von Montmorillonit und Xanthangummi und Guargummi ein einem Gewichtsverhältnis Montmorillonit/Gummis von 10 bis 25, bevorzugt 15 bis 22 umfasst.

10. Zusammensetzung nach Anspruch 9 in Form von Pulver.

11. Zusammensetzung nach einem der Ansprüche 1 bis 10, **dadurch** charakterisiert, dass es sich um ein Vollwertfutter handelt.

12. Herstellungsverfahren für ein Futterpräparat in flüssiger Form, das für Schweine bestimmt ist, umfassend die folgenden Schritte:
a) Mischen einer Zusammensetzung wie in einem der Ansprüche 9 bis 11 definiert mit einem Futtermittel in Form von Pulver, das für Schweine bestimmt ist, in einem Anteil von 0,5 bis 3 Gew.-% des Futters;
b) Verdünnen der Mischung mit dem 2- bis 4-fachen ihres Gewichts an Wasser, und Mischen, was es ermöglicht, ein stabilisiertes Futterpräparat in flüssiger Form zu erhalten.
